Europäisches Patentamt

European Patent Office

Office européen des brevets

(19)

(11) Veröffentlichungsnummer : **0 027 239**
**B1**

(12) **EUROPÄISCHE PATENTSCHRIFT**

(45) Veröffentlichungstag der Patentschrift :
05.10.83

(21) Anmeldenummer : **80106067.4**

(22) Anmeldetag : **07.10.80**

(51) Int. Cl.³ : **E 02 B 15/04**

(54) **Vorrichtung zur Beseitigung von Verunreinigungen auf der Oberfläche von Flüssigkeiten.**

(30) Priorität : **11.10.79 DE 2941187**

(43) Veröffentlichungstag der Anmeldung :
**22.04.81 Patentblatt 81/16**

(45) Bekanntmachung des Hinweises auf die Patenterteilung : **05.10.83 Patentblatt 83/40**

(84) Benannte Vertragsstaaten :
**FR GB IT NL**

(56) Entgegenhaltungen :
**FR A 2 200 858**
**FR A 2 383 272**
**GB A 1 405 560**
**US A 3 923 661**
**US A 3 966 615**

(73) Patentinhaber : **ERNO Raumfahrttechnik Gesellschaft mit beschränkter Haftung**
**Hünefeldstrasse 1-5**
**D-2800 Bremen (DE)**

(72) Erfinder : **Brandt, Manfred**
**Delmestrasse 23**
**D-2800 Bremen 1 (DE)**
Erfinder : **Kurmis, Viktor**
**Friedrich-Wilhelm-Strasse 31**
**D-2800 Bremen 1 (DE)**

(74) Vertreter : **Bischof, Hans-Jochen**
**Postfach 10 78 45**
**D-2800 Bremen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 027 239 B1

## Vorrichtung zur Beseitigung von Verunreinigungen auf der Oberfläche von Flüssigkeiten

Die Erfindung betrifft eine Vorrichtung zur Beseitigung von Verunreinigungen auf der Oberfläche von Flüssigkeiten, insbesondere zur Beseitigung von Kohlenwasserstoffen auf Wasseroberflächen mittels eines schwimmfähigen, an seiner Vorderseite offenen Behälters, der mit eigener oder mit Fremdkraft durch die Flüssigkeit bewegbar ist, wobei an der Vorderseite des Behälters zwischen den Seitenwänden eine scharfkantige Scherklappe mittels eines Gelenks an dem nach vorne ansteigenden Boden des Behälters schwenkbar angeordnet ist.

Eine Vorrichtung der vorgenannten Art, die insbesondere nach Tankerunglücken zur Beseitigung des aus den Tanks ausgelaufenen Erdöls eingesetzt wird, ist durch die US-A-3 966 615 bereits bekannt. Eine der Hauptschwierigkeiten ist dabei, das Öl von dem Wasser, auf dem es schwimmt, in ausreichendem Maße zu trennen, bevor es in die Tanks von Hilfsschiffen aufgenommen werden kann, weil die zu bewältigenden Mengen sonst zu groß werden. Diese Trennung des Öls von dem darunter liegenden Wasser ist allerdings bei den bisher bekannten Vorrichtungen noch nicht in ausreichendem Maße gelungen, so daß eine entsprechend aufwendige Nachbearbeitung der abgeschöpften Ölmengen erfolgen muß.

Diese bisher bekannt gewordene Vorrichtung für ein Schiff zum Sammeln von Verunreinigungen auf dem freien Wasser sieht an der Vorderseite des Schiffes einen Einlaufkanal für eine mehr oder weniger dicke Oberflächenschicht des zu reinigenden Wassers vor. Die Schichtdicke wird dabei durch einem durch eine Hubvorrichtung gesteuerten Schälkörper bestimmt, der die Einlauföffnung mehr oder weniger stark begrenzt. Die hier vorgeschlagene Lösung, die dazu dienen soll, nur die relativ dünne auf dem Wasser schwimmende Erdölschicht in den Einlauf gelangen zu lassen, weist allerdings den Nachteil auf, daß durch das Aufstauen des Wassers vor dem Schälkörper letztenendes doch das aufgestaute Wasser in mehr oder weniger großem Maße in den Einlauf gelangt.

Ferner ist z. B. durch die US-A-3 923 661 und die FR-A-2 200 858 ein schwimmergesteuerter Schälkörper bekannt.

Ein anderer Vorschlag geht dahin, die gesamte Vorderseite einer Schute als Einlauföffnung vorzusehen, die in viele kleine neben- und übereinander liegende einzelverschließbare Hohlräume unterteilt ist. Dabei sollen jeweils die Hohlräume, die unterhalb des Erdölfilms liegen, verschlossen werden, so daß auch hier nur der relativ dünne Erdölfilm selbst in das Innere des Sammelbehälters gelangt. Auch hier gelten die gleichen Vorbehalte, da durch das Aufstauen des Wassers vor den verschlossenen Hohlräumen doch ein Überlaufen des Wassers mit dem daraufliegenden Erdölfilm erfolgt.

Die Aufgabe der vorliegenden Erfindung ist es, diese bekannten Nachteile dadurch zu vermeiden, daß tatsächlich eine Trennung zwischen dem Wasser und dem darauf schwimmenden Erdölfilm erfolgt, ohne daß durch eine Aufstauen doch Wasser in unnötig großem Maße mit erfaßt wird, um so eine Vorrichtung zu schaffen, die die von ihr erfaßten Verunreinigungen möglichst vollständig abschöpft und dabei gleichzeitig eine wirksame Trennung von dem darunter vorhandenen Wasser gewährleistet. Ferner soll die Scherklappe stabilisiert werden, wobei ein rückwärtiges Überschlagen der Scherklappe verhindert wird.

Erfindungsgemäß wird das dadurch erreicht, daß bei Verwendung eines an sich bekannten an seiner Vorderseite offenen Behälters, der mit eigener oder mit Fremdkraft durch die Flüssigkeit, die zu reinigen ist, bewegbar ist, die Scherklappe eine rückwärtige Verlängerung als Stabilisierungsfläche aufweist. Zweckmäßig bildet die Scherklappe mit der Stabilisierungsfläche einen stumpfen Winkel von etwa 150 bis 160°.

Hinter der Scherklappe ist zweckmäßig etwa in Höhe des Gelenks der Scherklappe eine Beruhigungsebene oberhalb des Bodens des Sammelbehälters vorgesehen, die Durchlauföffnungen für das zusammen mit den Verunreinigungen über die Scherklappe hinweggelangte Wasser aufweist, die eine Verbindung zu im Boden des Behälters angeordnete Ablauföffnungen herstellen. Vorzugsweise sind in der Beruhigungsebene hinter den Durchlauföffnungen Schälklappen schwenkbar angeordnet, die an der Vorderseite eine angewinkelte, in der Ruhelage die Ablauföffnungen abschottende Sperrwand aufweisen. Diese Sperrwände besitzen zweckmäßig eine Höhe, die dem Abstand zwischen der Oberseite des Bodens des Behälters und der Beruhigungsebene entspricht. Vor der Rückwand des Behälters ist ein Sammeltank für die Verunreinigungen mit einer Absaugpumpe angeordnet.

Es ist vorteilhaft, sowohl die Scherklappe als auch die Schälklappen starr mit Schwimmern zu verbinden, die die Höheneinstellung der Klappen steuern. Dabei ist es zweckmäßig, die Schwimmerhalterungen längenveränderlich zu gestalten und die Schwimmer selbst an diesen Halterungen höhenveränderlich anzuordnen. Dabei sind die Schälklappenschwimmer als Regelorgan für den Ablauf des Wassers durch die Ablauföffnungen vorgesehen.

In an sich bekannter Weise sollten die Seitenwände und der Boden des Behälters doppelwandig ausgeführt sein, um auf diese Weise Auftriebskammern für die Schwimmfähigkeit zu gewinnen.

In einer bevorzugten Ausführungsform sind die Behälter als von einem Mutterschiff aussetzbare Reinigungsvorrichtungen ausgebildet, wobei einerseits der Antrieb der Behälter durch das Mutterschiff erfolgen kann und andererseits die aus den Sammeltanks abzupumpenden Verunreinigungen in Sammelbehältern des Mutterschiffes aufgenommen werden können. Dabei kann es zweckmäßig sein, den vorderen Teil der Seitenwände des Behälters und die zwischen ihnen beweglich angeordnete Scherklappe derart auszubilden, daß sie zusammen eine düsenförmige Einlauföffnung für den Behälter bilden.

Der Vorteil dieser erfindungsgemäßen Ausbildung von Sammelbehältern zur Reinigung von Wasseroberflächen liegt vor allen Dingen darin, daß durch die Schwimmergesteuerte scharfkantige Scherklappe eine Trennung des Wassers von dem auf ihm schwimmenden Erdöl erfolgt, ohne daß durch einen Aufstau an der Vorderseite unnötig viel Wasser mit in den Sammelbehälter gelangt. Das « abgescherte » Öl gelangt so mit allenfalls einer dünnen Wasserschicht in den Sammelbehälter, während das Wasser im übrigen sofort in den Bereich unterhalb des Sammelbehälters gelenkt wird. Ein rückwärtiges Überschlagen der Scherklappe wird dabei durch die mit der Scherklappe verbundene Stabilisierungsfläche verhindert. Durch die höhenveränderliche Anordnung der Schwimmer sowohl an der Scherklappe wie an den in der Beruhigungsebene angeordneten Schälklappen ist eine solche Feineinstellung dieser Klappen möglich, daß eine fast vollständige mechanische Trennung zwischen Wasser und Verunreinigungsschicht möglich wird.

In den beigefügten Zeichnungen ist schematisch eine Vorrichtung nach der Erfindung dargestellt, und zwar zeigen

Figur 1 einen Längsschnitt durch eine Vorrichtung nach der Erfindung,

Figur 2 einen Schnitt nach Fig. 1 in Höhe der Schnittlinie II/II,

Figur 3 ein Detail der Scherklappe nach der Erfindung und

Figur 4 schematisch in einer Draufsicht eine Einsatzmöglichkeit bei der erfindungsgemäßen Vorrichtung.

Die Vorrichtung nach der Erfindung besteht aus einem Sammelbehälter 1 mit den (doppelten) Seitenwänden 2 und der Rückwand 3 sowie dem ebenfalls doppelwandigen Boden 7, der etwa in der Mitte unter einem stumpfen Winkel nach oben abgewinkelt ist. An der Vorderseite dieses Bodens 7 ist mittels eines Gelenks 5 eine scharfkantige Scherklappe 4 befestigt, die eine rückwärtige Verlängerung 6 als Stabilisierungsfläche aufweist. Oberhalb des Bodens 7 ist etwa in Höhe des Gelenks 5 ein Zwischenboden als Beruhigungsebene 9 angeordnet, in dem eine Vielzahl von Durchlauföffnungen 10 vorgesehen ist. Jeweils hinter den Durchlauföffnungen 10 ist in der Beruhigungsebene eine Schälklappe 11 mit einer abgewinkelten Sperrwand 12 schwenkbar befestigt. Diese Sperrwand 12 schottet in der Ruhelage den Raum zwischen der Beruhigungsebene 9 und der Oberseite des Bodens 7 vor den im Boden 7 vorgesehenen Ablauföffnungen 8 ab. Sowohl die Scherklappe 4 wie auch die Schälklappen 11 sind über starre Halterungen 19 mit Schwimmern 16 bzw. 17 starr verbunden, wobei die Halterungen 19 zweckmäßig längenveränderlich sind und die Anordnung der Schwimmer 16 bzw. 17 höhenveränderlich. Hinter der Beruhigungsebene 9 ist ein Sammeltank 14 mit einer Pumpe 15 vorgesehen.

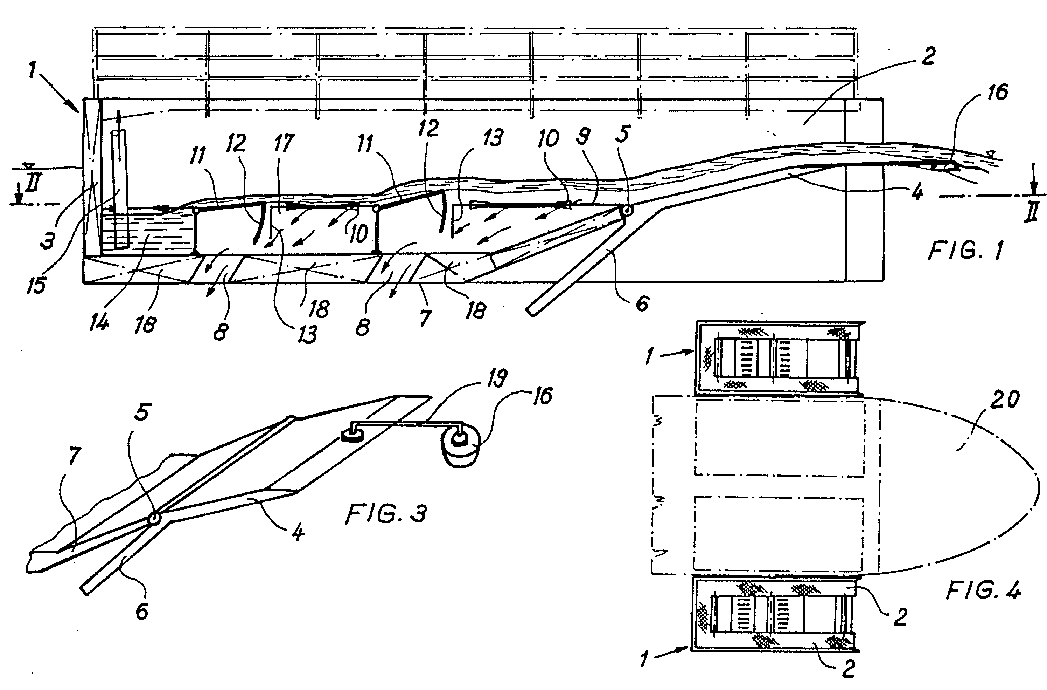

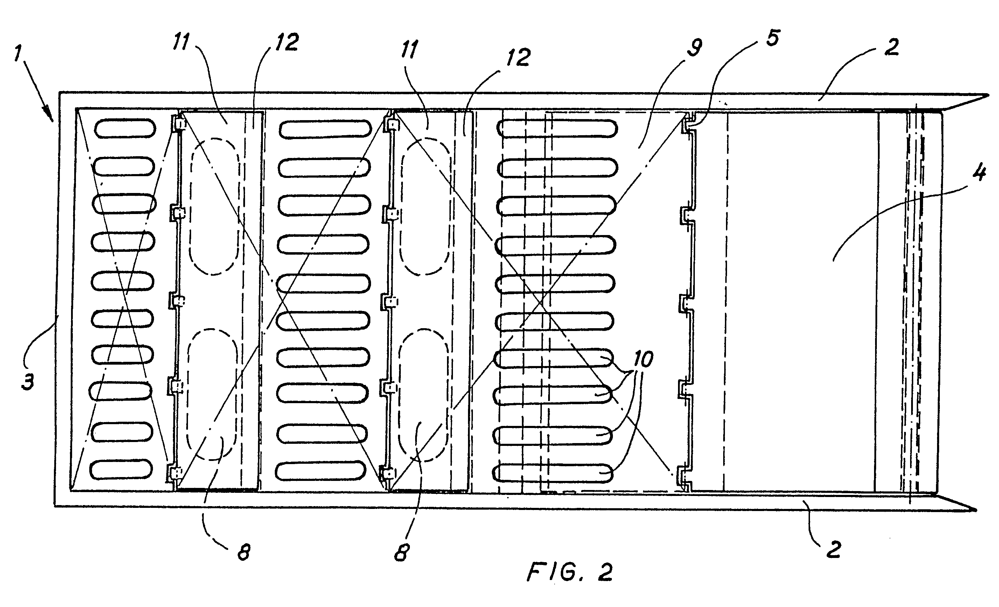

Die Vorrichtungen nach der Erfindung sind zweckmäßig als von einem Mutterschiff 20 aussetzbare Vorrichtungen ausgebildet, wobei die Vorrichtungen im Einsatz beispielsweise, wie in der Fig. 4 dargestellt, zu beiden Seiten des Mutterschiffs aussetzbar sind und mit diesen zusammen durch die zu reinigende Flüssigkeit gezogen werden können.

Die Arbeitsweise der Vorrichtung nach der Erfindung ist folgende : wird die erfindungsgemäße Vorrichtung in eine zu reinigende Flüssigkeit ausgesetzt und durch diese hindurchbewegt, dann wird eine Oberflächenschicht dieser Flüssigkeit durch die offene Vorderseite in den Sammelbehälter eindringen können, wenn die Scherklappe 4 entsprechend der Einstellung des Schwimmers 16 an seiner Halterung 19 die scharfe Vorderkante der Scherklappe 4 unterhalb der Flüssigkeitsoberfläche hält. Die Dicke der eindringenden Schnitt hängt dabei ausschließlich von der Schwimmereinstellung ab. Man wird also den Schwimmer so einstellen, daß außer der zu beseitigenden Schicht von Verunreinigungen, beispielsweise der auf dem Wasser schwimmende Ölfilm, nur eine möglichst dünne Wasserschicht mit in den Sammelbehälter gelangt. Nach dem Auflaufen dieser aus Öl und Wasser bestehenden Schicht auf die Beruhigungsebene 9 wird dieses Gemisch anfangs durch die Durchlauföffnungen 10 in den unter der Beruhigungsebene 9 liegenden Hohlraum gelangen. Ein Auslaufen durch die Ablauföffnungen 8 im Boden 7 wird zunächst durch die Sperrwand 12 der Schälklappe 11 hinter diesem Raum verhindert. Erst wenn der erste Hohlraum vollgelaufen ist, wird das in den Sammelbehälter eindringende Gemisch über die erste Schälklappe 11 hinweg über die Beruhigungsebene 9 weiter in Richtung auf den Sammeltank 14 laufen. Dieses Auffüllen des Hohlraumes unterhalb der Beruhigungsebene 9 wird in gleicher Weise wie bei dem ersten Hohlraum noch einmal erfolgen, bevor schließlich der Ölfilm in den Sammelbehälter 14 gelangt.

Die Aufgabe der Schälklappe 11 mit ihren Sperrwänden 12 ist es nun, nach dem Vollaufen der Hohlräume, die jeweils vor ihnen vorhanden sind, den Durchgang in Richtung auf die Ablauföffnungen 8 so weit zu öffnen, daß das in den Hohlräumen angesammelte Wasser durch diese Ablauföffnungen 8 außerhalb des Sammelbehälters gelangen kann. Dazu sind diese Schälklappen 11 ebenfalls durch Schwimmer gesteuert, deren Aufgabe und Wirksamkeit dem des Scherklappenschwimmers 16 entspricht. Da auch in diesen Hohlräumen die Ölschicht an der Oberseite schwimmen wird, wird diese zunächst nach dem Vollaufen der Hohlräume wieder nach außen gelangen, und zwar durch dieselben Durchlauföffnungen hindurch, durch die sie ursprünglich in diese Hohlräume eingeströmt ist. Durch das Anheben der Schälklappen 11 nach dem Vollaufen der Hohlräume entsteht vor der Sperrwand oberhalb der Beruhigungsebene 9 ein Stauraum, der im allgemeinen jedoch nur die dünne Wasserschicht betreffen wird, auf der der eigentliche zu beseitigende Ölfilm schwimmt. Auf diese Weise wird außer der Scherwirkung durch die scharfe Vorderkante der Scherklappe 4 eine weitere mechanische Trennung des zu beseitigenden Ölfilms von noch vorhandenem Wasser erzwungen, so daß in dem Sammeltank 14 außer dem zu beseitigenden Öl nur noch sehr wenig Wasser vorhanden sein wird. Auf diese Weise ist die erwünschte Abtrennung der Verunreinigungen von dem sauberen Wasser möglich, so daß eine weitere Aufbereitung zunächst nicht mehr erforderlich erscheint.

Die erfindungsgemäßen Vorrichtungen können in ihrer Größe so gehalten werden, daß sie bequem auf sogenannten Mutterschiffen transportiert werden können, um dann am Einsatzort erst außenbords an diesen selben Mutterschiffen vertäut zu werden und von den Mutterschiffen selbst durch die zu reinigenden Gewässer geschleppt zu werden, wobei die Mutterschiffe den erforderlichen Tankraum für die Verunreinigungen, beispielsweise das auf dem Wasser schwimmende Öl, besitzen können.

**Ansprüche**

1. Vorrichtung zur Beseitigung von Verunreinigungen auf der Oberfläche von Flüssigkeiten, insbesondere zur Beseitigung von Kohlenwasserstoffen auf Wasseroberflächen mittels eines schwimmfähigen, an seiner Vorderseite offenen Behälters (1), der mit eigener oder mit Fremdkraft durch die Flüssigkeit bewegbar ist, wobei an der Vorderseite des Behälters (1) zwischen den Seitenwänden (2) eine scharfkantige Scherklappe (4) mittels eines Gelenks (5) an dem nach vorne ansteigenden Boden (7) des Behälters schwenkbar angeordnet ist, dadurch gekennzeichnet, daß die Scherklappe (4) eine rückwärtige Verlängerung als Stabilisierungsfläche (6) aufweist.

2. Vorrichtung nach Anspruch 1, dadurch gekennzeichnet, daß die Stabilisierungsfläche (6) mit der Scherklappe (4) einen stumpfen Winkel von vorzugsweise etwa 150 bis 160° bildet.

3. Vorrichtung nach Anspruch 1 oder 2, dadurch gekennzeichnet, daß oberhalb des Bodens (7) des Behälters (1) etwa in Höhe des Gelenks (5) eine Beruhigungsebene (9) vorgesehen ist.

4. Vorrichtung nach Anspruch 3, dadurch gekennzeichnet, daß in der Beruhigungsebene (9) Durchlauföffnungen (10) und in dem Boden (7) Ablauföffnungen (8) vorgesehen sind.

5. Vorrichtung nach Anspruch 3 oder 4, dadurch gekennzeichnet, daß in der Beruhigungsebene (9) Schälklappen (11) schwenkbar angeordnet sind, die an der Vorderseite eine abgewinkelte, in der Ruhelage die Ablauföffnungen (8) abschottende Sperrwand (12) aufweisen.

6. Vorrichtung nach Anspruch 5, dadurch gekennzeichnet, daß die Sperrwand (12) eine Höhe aufweist, die dem Abstand zwischen der Oberseite des Bodens (7) und der Beruhigungsebene (9) entspricht.

7. Vorrichtung nach mindestens einem der Ansprüche 1 bis 6, dadurch gekennzeichnet, daß vor der Rückwand (3) des Behälters (1) ein Sammeltank (14) mit einer Absaugpumpe (15) vorgesehen ist.

8. Vorrichtung nach mindestens einem der Ansprüche 1 bis 7, dadurch gekennzeichnet, daß die Scherklappe (4) starr mit einem Scherklappenschwimmer (16) verbunden ist.

9. Vorrichtung nach Anspruch 8, dadurch gekennzeichnet, daß die Schwimmerhalterung (19) des Scherklappenschwimmers längenveränderlich ist und daß der Scherklappenschwimmer (16) an der Schwimmerhalterung (19) höhenveränderlich befestigt ist.

10. Vorrichtung nach einem der Ansprüche 1 bis 9, dadurch gekennzeichnet, daß die Schälklappen (11) mit den Sperrwänden (12) mit Schälklappenschwimmern (17) höhenverstellbar verbunden sind, deren Auftriebsvermögen regelbar ist.

11. Vorrichtung nach Anspruch 10, dadurch gekennzeichnet, daß die Schälklappenschwimmer (17) als Regelorgan für den Ablauf des in den Raum vor den Sperrwänden eingelaufenen Wassers durch die Ablauföffnungen (8) im Boden (7) vorgesehen sind.

12. Vorrichtung nach den Ansprüchen 1 bis 11, dadurch gekennzeichnet, daß im Boden (7) und den Seiten- (2) bzw. Rückwänden (3) des Behälters (1) Auftriebskammern (18) vorgesehen sind.

13. Vorrichtung nach einem der Ansprüche 1 bis 12, dadurch gekennzeichnet, daß die Behälter (1) als von einem Mutterschiff (20) aussetzbare Reinigungsvorrichtungen ausgebildet sind.

14. Vorrichtung nach Anspruch 13, dadurch gekennzeichnet, daß die aus dem Sammeltank (14) abgepumpten Verunreinigungen in Sammelbehälter des Mutterschiffs (20) abpumpbar sind.

15. Vorrichtung nach einem der Ansprüche 1 bis 14, dadurch gekennzeichnet, daß der vordere Teil der Seitenwände (2) des Behälters (1) und die zwischen ihnen beweglich angeordnete Scherklappe (4) derart ausgebildet sind, daß sie eine düsenförmige Einlauföffnung für den Behälter (1) bilden.

**Claims**

1. Apparatus for removing polluting products from the surface of liquids, in particular for removing hydrocarbons from the surface of water by means of a floating container (1) open at its forward edge, which is movable by internal or external power through the liquid, and which has at the forward edge between the sidewalls (2) a sharp edged flap (4) arranged pivotably by means of a pivot (5) on the forwardly floor rising (7) of the container, characterised in that the flap (4) has a rearward extension as a stabilizing surface (6).

2. Apparatus according to claim 1, characterised in that the stabilizing surface (6) forms an obtuse angle of approximately 150° to 160° with the flap (4).

3. Apparatus according to claim 1 or 2, characterised in that a calming surface (9) is provided above the floor (7) of the container (1), approximately at the same height as the pivot (5).

4. Apparatus according to claim 3, characterised in that the calming surface (9) includes apertures (10), and the floor (7) has outlets (8).

5. Apparatus according to claim 3 or 4, characterised in that separator flaps (11) are pivoted in the calming surface (9), the flaps having at their forward sides an angled wall (12) which, in its position of rest, blocks off the outlets (8).

6. Apparatus according to claim 5, characterised in that the wall (12) has a height corresponding to the distance between the upper surface of the floor (7) and the calming surface (9).

7. Apparatus according to one of claims 1 to 6, characterised in that a collecting tank (14) with an extractor pump (15) is arranged in front of the rear wall (3) of the container (1).

8. Apparatus according to one of claims 1 to 7, characterised in that the flap (4) is connected rigidly with a float (16).

9. Apparatus according to claim 8, characterised in that the support (19) for the float is variable in length, and in that the float (16) is variable in height on the support (19).

10. Apparatus according to one of claims 1 to 9, characterised in that the separator flaps (11) with the walls (12) are connected at a variable height with separator floats (17), the buoyancy of which can be altered.

11. Apparatus according to claim 10, characterised in that the separator floats (17) serve to control the flow through the outlets (8) in the floor (7) of the water which runs into the space in front of the walls.

12. Apparatus according to claims 1 to 11, characterised in that buoyancy chambers (18) are provided in the floor (7) and in the side (2) and rear (3) walls of the container (1).

13. Apparatus according to one of claims 1 to 12, characterised in that the containers (1) are arranged so that they can be lowered as cleaning apparatus from a mother ship (20).

14. Apparatus according to claim 13, characterised in that the polluting products pumped from the collecting tank (14) can be pumped away from collecting containers in the mother ship (20).

15. Apparatus according to one of claims 1 to 14, characterised in that the forward part of the side walls (2) of the container (1), and the flap (4) moveable between them, are so arranged that they form a nozzle-shaped inlet opening for the container (1).

**Revendications**

1. Dispositif pour l'élimination d'impuretés sur la surface extérieure de liquides, notamment pour éliminer des hydrocarbures sur des surfaces d'eau, au moyen d'un récipient (1) capable de flotter, ouvert sur son côté antérieur, qui est déplaçable à travers le liquide, par sa propre force ou par une force étrangère, le côté antérieur du récipient (1) comportant un clapet de pelage de surface (4), à arête vive, monté entre les parois latérales, à pivotement, au moyen d'une articulation (5) sur le fond (7) du récipient, incliné ascendant vers l'avant, dispositif caractérisé en ce que le clapet de pelage de surface (4) présente un prolongement vers l'arrière, servant de surface de stabilisation (6).

2. Dispositif suivant la revendication 1, caractérisé en ce que la surface de stabilisation (6) forme, avec le clapet de pelage de surface (4) un angle obtus, notamment de 150 à 160 degrés.

3. Dispositif suivant l'une des revendications 1 ou 2, caractérisé en ce que, au-dessus du fond (7) du récipient (1) est prévu un plan de repos de l'écoulement liquide (9) sensiblement à hauteur de l'articulation (5) du clapet (4).

4. Dispositif suivant la revendication 3, caractérisé en ce que dans le plan de repos (9), sont prévus des orifices de traversée (10) et, dans le fond (7) des orifices d'évacuation (8).

5. Dispositif suivant l'une quelconque des revendications 3 ou 4, caractérisé en ce que, dans le plan de repos (9) sont disposés, à pivotement, des clapets de pelage de surface (11), qui comportent, sur leur côté antérieur, une paroi de barrage (12) qui, dans la position de repos, obture les orifices d'évacuation (8).

6. Dispositif suivant la revendication 5, caractérisé en ce que la paroi de barrage (12) présente une hauteur qui correspond à la distance entre la face supérieure de fond (17) et le plan de repos (9).

7. Dispositif suivant l'une quelconque des revendications 1 à 7, caractérisé en ce que, devant la paroi arrière (3) du récipient (1) est prévu un réservoir collecteur (14) avec une pompe aspirante (15).

8. Dispositif suivant l'une quelconque des revendications 1 à 7, caractérisé en ce que le clapet de pelage de surface (4) est relié rigidement à un flotteur de clapet (16).

9. Dispositif suivant la revendication 8, caractérisé en ce que l'organe de support (19) du flotteur de clapet (16) est de longueur réglable et le flotteur (16) est fixé sur le support (19) de manière réglable en hauteur.

10. Dispositif suivant l'une quelconque des revendications 1 à 9, caractérisé en ce que les clapets de pelage de surface (11) avec parois de barrage (12) sont reliés, de manière réglable en hauteur, aux flotteurs de clapet dont la capacité de flottaison est réglable.

11. Dispositif suivant la revendication 10, caractérisé en ce que les clapets de pelage de surface (17) sont prévus comme organes de réglage pour l'écoulement de l'eau, ayant pénétré dans l'espace devant les parois de barrage, à travers les orifices d'évacuation (8) du fond (7).

12. Dispositif suivant l'une quelconque des revendications 1 à 11, caractérisé en ce que, dans le fond (7) et dans les parois latérales (2) et arrière (3) du récipient (1), sont prévues des chambres de propulsion ascensionnelle (18).

13. Dispositif suivant l'une quelconque des revendications 1 à 12, caractérisé en ce que les récipients (1) sont constitués par des dispositifs d'épuration pouvant être mis en œuvre par un bateau pilote (20).

14. Dispositif suivant la revendication 13, caractérisé en ce que les impuretés collectées sont pompées hors du réservoir collecteur (14) et amenées par pompage dans le réservoir collecteur du bateau pilote (20).

15. Dispositif suivant l'une quelconque des revendications 1 à 14, caractérisé en ce que la partie antérieure des parois latérales (2) du récipient (1) et les clapets de pelage de surface (4) montés mobiles entre eux, sont constitués de telle manière qu'ils forment une ouverture d'entrée en forme de buse pour le récipient.

1

FIG. 1

FIG. 3

FIG. 4

0 027 239

FIG. 2

0 027 239